# EUROPEAN PATENT APPLICATION

(11) **EP 2 338 695 A1**
(43) Date of publication of application: **29.06.2011**
(21) Application number: 09817653.0
(22) Date of filing: 16.09.2009
(51) Int. Cl.: B60B 9/00, B60B 1/06, B60B 9/02, B60B 9/12, B60C 7/00, B60C 7/24

(54) **NON-PNEUMATIC TIRE**

(30) Priority: 01.10.2008 JP 2008256630
(71) Applicant: Bridgestone Corporation, Tokyo 104-8340 (JP)
(72) Inventor: FUNAKI, Yusuke, Kodaira-shi Tokyo 187-8531 (JP)
(74) Representative: Oxley, Robin John George
(86) International application number: PCT/JP2009/066175
(87) International publication number: WO 2010/038616

(57) **Abstract**

An object of the present invention is to provide a link-type non-pneumatic tire which can reduce the rolling resistance and improve the drive comfort and drivability compare to the solid tire, and also drastically reduce its weight compare to the conventional link-type non-pneumatic tire.

The present invention provides a non-pneumatic tire 2 to be mounted to a circular mounting element 3 to form tire/wheel assembly 1, comprises: a tread 7 disposed outside the mounting element 3 in a tire radial direction and extending in a tire circumferential direction in a state where constituting the tire/wheel assembly 1; a plurality of link mechanisms 8 mounded to the mounting element 3 with intervals therebetween in the tire circumferential direction and connecting the tread 7 to the mounting element 3 in such a manner that the tread 7 can move in the tire width direction and radial direction with respect to the mounting element 3; and ring-like members 9L, 9R extending in the tire circumferential direction and connecting circumferentially adjacent link mechanisms 8 with each other to generate reaction force against a displacement of the tread 7 relative to the mounting element 3.

## Description

### Technical Field

The present invention relates to a non-pneumatic tire not requiring a pressurized air thereinto, specifically, realizing a lightweight non-pneumatic tire.

### Prior Art

Pneumatic tires are widely used for automobiles et al, however, the pneumatic tires have an unavoidable problem, as a result from their structure, which is a degradation or loss of the tire internal pressure due to a blowout of the tire.

In order to address this problem, a variety of non-pneumatic tires not requiring a pressurized air are presented. For example, so-called solid tire having a solid structure can avoid the problem such as the degradation or loss of the tire internal pressure. However, since the solid tire arises another problem that both of the weight and hardness of the tire are increased, sufficient drive comfort and drivability cannot be assured and rolling resistance also become greater in comparison with a pneumatic tire. Thus, the solid tire is not used except in special purpose.

Present applicant, therefore, suggested a link-type non-pneumatic tire, as disclosed in JP2008-74345, comprising link mechanisms which movably support a tread in the tire width direction and tire circumferential direction against a rim member; and at least one type of elastic means which imparts stiffness on the relative movement between the tread and the rim member. According to the link-type non-pneumatic tire, it is possible to reduce the rolling resistance and assure excellent drive comfort and drivability without such the problem of the blowout and the like.

### Prior Art Documents

### Patent Documents

Patent Document 1: JP2008-74345

### Disclosure of the Invention

### Problems to be solved by the Invention

However, for the link-type non-pneumatic tire as disclosed in the patent document 1, much further reduction of weight is desired.

Accordingly, an object of the present invention is to provide a link-type non-pneumatic tire which can reduce the rolling resistance and improve the drive comfort and drivability compare to the solid tire, and also drastically reduce its weight compare to the conventional link-type non-pneumatic tire.

### Means for solving the Problems

In order to achieve the object described above, a non-pneumatic tire to be mounted to a circular mounting element to form tire/wheel assembly, comprises:
a tread disposed outside the mounting element in a tire radial direction and extending in a tire circumferential direction in a state where constituting the tire/wheel assembly;
a plurality of link mechanisms mounded to the mounting element with intervals therebetween in the tire circumferential direction and connecting the tread to the mounting element in such a manner that the tread can move in the tire width direction and radial direction with respect to the mounting element; and
ring-like members extending in the tire circumferential direction and connecting circumferentially adjacent link mechanisms with each other to generate reaction force against a displacement of the tread relative to the mounting element.

According to the non-pneumatic tire of the present invention, when a vertical load is applied to the tread, the tread moves in the radial direction with respect to the mounting element while receiving the reaction force mainly generated from an eccentric deformation of the ring-like members. When a lateral force is applied to the tread, the tread moves in the width direction with respect to the mounting element while receiving the reaction force mainly generated from an out-of-plane deformation with respect to a plane along the tire equatorial plane.

Therefore, according to the non-pneumatic tire of the present invention, since the flexibility is higher and the amount of rubber material is less than the solid tire with the solid structure, it is possible to reduce the rolling resistance and sufficiently improve the drive comfort and drivability. Also, since it is constituted to generate the reaction force against the relative displacement of tread to the mounting element in the tire radial direction and tire width direction by connecting the link members one another in the circumferential direction with the ring-like member, it is possible to drastically reduce its weight in comparison with the conventional non-pneumatic tire which each link mechanism has at least one type of elastic means.

It is preferable that each the link-mechanism is constituted with a horizontal link bar disposed outside the said mounting element in the tire radial direction and extending along the tire width direction, a pair of right and left inner link arms which are swingablly disposed to said mounting element in a plane along the tire width direction, and a pair of right and left outer link arms swingablly connecting these inner link arms and horizontal link bar,
wherein said ring-like members respectively are provided on the pair of the outer link arms.

Further, it is preferable that jointing portions between said outer link arms and said inner link arms are respectively located inner side of the ends of said horizontal link bar in the tire width direction.

Further, it is preferable that said link mechanism is connected to said mounting element via a torsion spring which generates reaction force against the swing of the link mechanism in the tire circumferential direction relative to said mounting element.

Further, it is preferable that a sectional shape of the ring-like member is formed into a laterally long rectangular section in a cross section along the tire width direction.

### Effect of the Invention

According to the present invention, a link-type non-pneumatic tire which can reduce the rolling resistance and improve the drive comfort and drivability compare to the solid tire, and also drastically reduce its weight compare to the conventional link-type non-pneumatic tire can be provided.

### Brief Description of the Drawings

FIG. 1 is an overall perspective view of a tire/wheel assembly in which a non-pneumatic tire according to an embodiment of the present invention is mounted to a wheel.
FIG.2 is an enlarged perspective view of a part of the tire/wheel assembly shown in FIG.1.
FIG.3 is a perspective view showing one of link mechanisms of the non-pneumatic tire of the embodiment of FIG. in mounted state to a rim.
FIG.4 is a front view of the tire/wheel assembly of FIG.1 which a portion is omitted for simplification.
FIG.5 is a schematic front view of the tire/wheel assembly of FIG.1 in a state of being applied a vertical load and lateral force.
FIG.6 is a front view of a tire/wheel assembly which a non-pneumatic tire according to another embodiment of the present invention is mounted to a wheel in the same state as FIG.4.
FIG.7 is a schematic front view of the tire/wheel assembly of FIG.6 in a state of being applied a vertical load and lateral force.
FIG. 8 is a front view of a tire/wheel assembly which a non-pneumatic tire according to another embodiment of the present invention is mounted to a wheel in the same state as FIG.4.
FIG.9 is a schematic front view of the tire/wheel assembly of FIG.8 in a state of being applied a vertical load and lateral force.
FIG.10 is a partial enlarged perspective view of a tire/wheel assembly which a non-pneumatic tire according to another embodiment of the present invention is mounted to a wheel.
FIG.11 is a perspective view showing one of link mechanisms of the non-pneumatic tire of the embodiment of FIG.10 in mounted state to the wheel.
FIG.12(a) is a diagram showing FEM analytical result of a vertical spring, a lateral spring, and a back and forth spring in an example tire 1; FIG.12(b) is a diagram showing FEM analytical result of a vertical spring, a lateral spring, and a back and forth spring in an example tire 2.
FIG.13 is a perspective view of a link-type non-pneumatic tire as a comparative example. Reference Symbols

1 Tire/wheel assembly
2, 22, 42, 62 Tire
3 Wheel
5 Recess
7 Tread
8, 28, 48, 68 Link mechanism
9L, 9R; 29L, 29R; 49L, 49R; 69L, 69R Ring like member
10 Torsion bar
11L, 11R; 31L, 31R; 51L, 51R; 71L, 71R Inner link arm
12 Segment
13L, 13R; 33L, 33R; 53L, 53R; 73L, 73R Outer link arm
15 Separated plate
16L, 16R; 56L, 56R Bracket for separated plate
18L, 18R; 38L, 38R; 58L, 58R Bracket for Ring like member
78L,78R Projected portion

### Best Mode for implementing the Invention

A non-pneumatic tire according to an embodiment of the present invention will be described with reference to the drawings hereinafter.

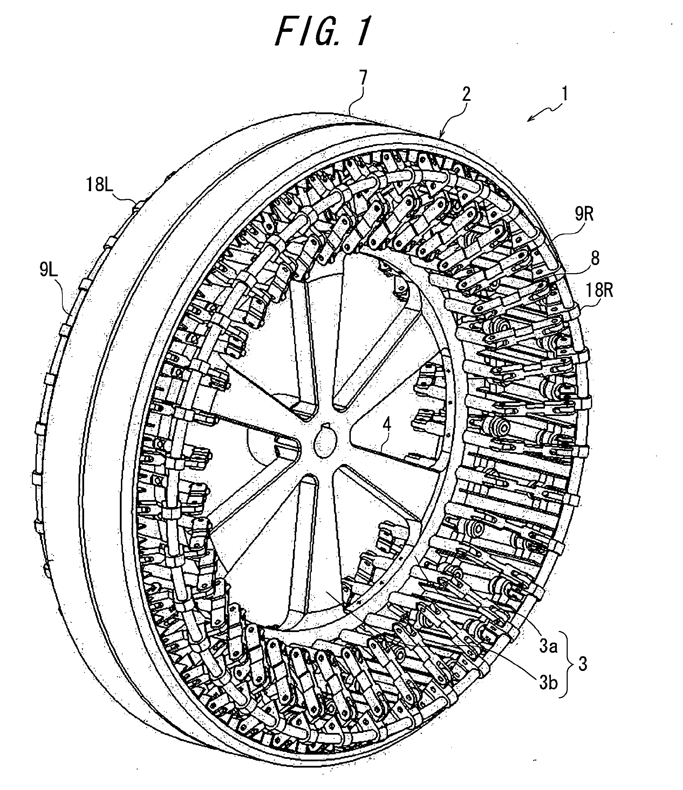

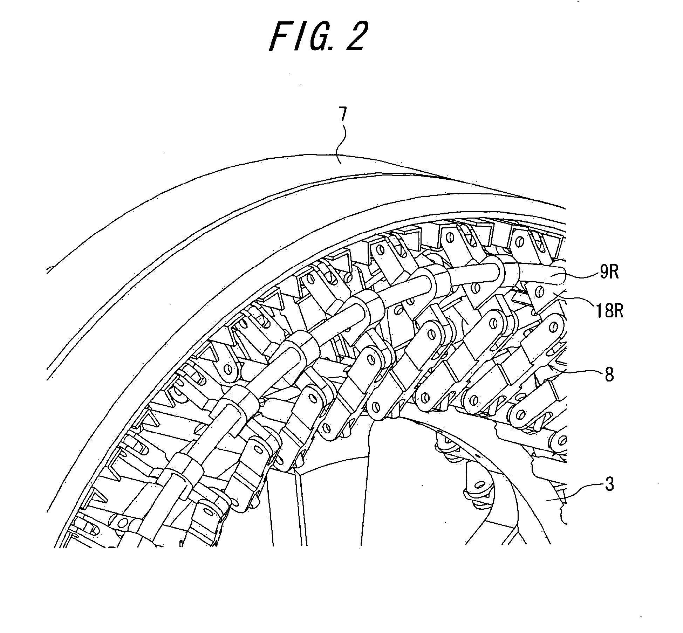

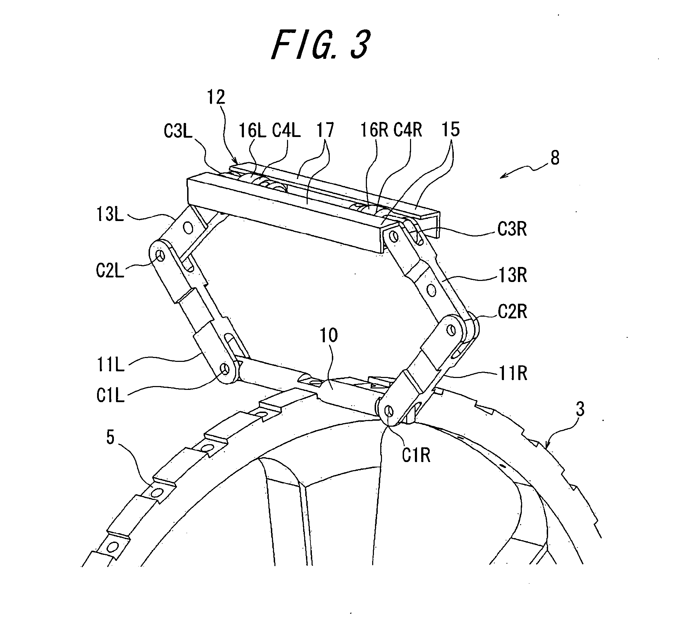

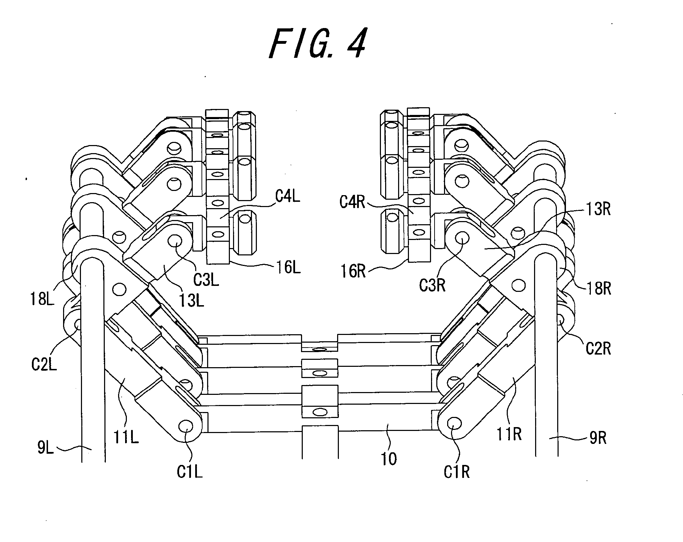

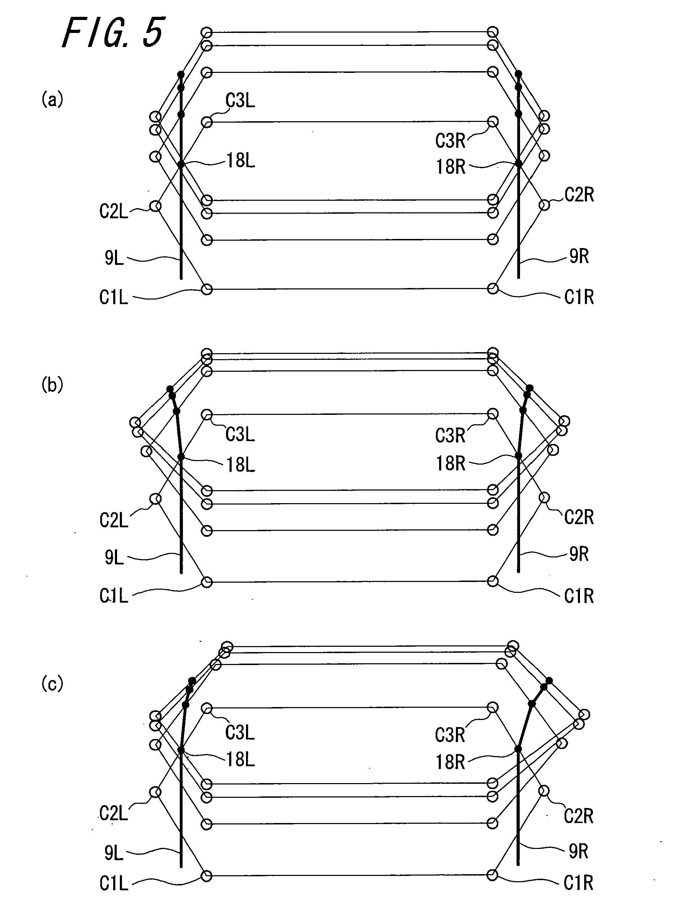

Here, FIG. 1 is an overall perspective view of a tire/wheel assembly in which a non-pneumatic tire (which will be referred to simply as a "tire" hereinafter) according to an embodiment of the present invention is mounted to a wheel. FIG.2 is an enlarged perspective view of a part of the tire/wheel assembly shown in FIG.1. FIG.3 is a perspective view showing one of link mechanisms of the non-pneumatic tire of the embodiment of FIG.1 in mounted state to a rim. FIG.4 is a front view of the tire/wheel assembly of FIG. 1 which a portion is omitted for simplification. FIG.5 is a schematic front view of the tire/wheel assembly of FIG.1 in a state of being applied a vertical load and lateral force.

A tire/wheel assembly 1 as shown in FIG. 1 is constituted by mounting a tire 2 of the present embodiment to a wheel 3 as a circular mounting element. The wheel 3 has an integrated one-piece structure of a rim portion 3 a on which the tire is mounted, and a disk portion 3b which connects between the rim portion 3a and an axle of a vehicle (not shown) with each other. For the wheel 3, particularly to save weight, metal materials such as aluminum, aluminum alloy and the like can be used. For further weight saving, a plurality of fan-shaped openings 4 is formed in the wheel 3. In order to strongly fix the tire 2 on the wheel 3, a number of recesses 5 (see FIG. 3, for example) for mounting the tire can be formed on the outer circumference surface of the rim portion 3 a in the circumferential direction.

The tire 2 of the present embodiment, as shown in FIG. 1 and FIG. 2, comprises a tread 7 disposed outside the wheel 3 in a tire radial direction and extending in a tire circumferential direction, a plurality of link mechanisms 8 mounded to the wheel 3 with intervals therebetween in the tire circumferential direction and connecting the tread 7 to the wheel 3 in such a manner that the tread 7 can move in a tire width direction and radial direction with respect to the wheel 3; and a pair of right and left ring-like members 9L, 9R extending in the tire circumferential direction and connecting circumferentially adjacent link mechanisms 8 with each other to generate reaction force against a displacement of the tread 7 relative to wheel 3.

The tread 7 is a thin-plate like member continuously extending in the tire circumferential direction and its outer surface constitutes a tread surface to be contacted with road surface during grounding. The tread 7 can be made from a elastic material such as rubber. The tread 7 may have a reinforcing layer to reinforce the tread 7 on its inner surface or in it. The tread 7 may be constituted only by a plane-like crown portion as shown. However, for a protection for the tire parts in driving or for aesthetic purposes, the both width edge of the tread 7 may extend over the wheel 3 to cover the whole tire.

The link mechanism 8, as shown in FIG. 3, has a pair of right and left inner link arms 11L, 11R which is connected to the wheel 3 via an after-mentioned torsion bar 10 and swingable in a plane along the tire width direction, a segment 12 as a horizontal link bar which is disposed outside the wheel 3 in the tire radial direction and extending along the tire width direction, and a pair of right and left outer link arms 13L, 13R swingablly connecting these inner link arms 11L, 11 R and segment 12 in the plane along the tire width direction. The torsion bar 10 and the pair of right and left inner link arms 11L, 11 R are connected with jointing portions C1L, C1R. The pair of right and left inner link arms 11L, 11R and the pair of right and left outer link arms 13L, 13R are connected with jointing portions C2L, C2R. The pair of right and left outer link arms 13L, 13R and the segment 12 are connected with jointing portions C3L, C3R. Each member constituting the link mechanism 8 can be made from light weight metal materials such as aluminum, aluminum alloy and the like.

The torsion bar 10 has a torsion spring function which generates reaction force against twisting. In this embodiment, the torsion bar 10 provides a reaction force against back and forth swings of the link mechanism 8 when the link mechanism 8 swings back and forth in the tire circumferential direction with respect to the wheel 3. The torsion bar 10 extends along the tire width direction and its midsection (that is, the center of the torsion bar 10) is fixed in the recess 5 of the rim portion 3a of wheel 3 so as not to rotate. In view of allowing the tire to be easily put on and taken off from the wheel 3, the torsion bar 10 is fixed to the wheel 3 by way of well-know fixing member such as bolt and nut. Therefore, the torsion bar 10 connects the pair of link arms 11L, 11R to the wheel 3, and also functions as a spring means for imparting spring in the back and force direction (in the tire circumferential direction) to the tire. It is understood that fixing location, the number of fixing point and so on of the torsion bar 10 are not limited, as long as the torsion bar 10 performs as the torsion spring, thus, they can be freely modified depending on the structures of tire and wheel.

Each segment 12 has a pair of separated plates 15, 15 respectively extending in the tire width direction, and a pair of right and left brackets 16L, 16R for the separated plates supporting the pair of the separated plates with small interval therebetween in the tire circumferential direction. Various shapes can be used for the separated plates 15, 15. In this embodiment, the separated plate have respectively an angle structure for improving its stiffness. The interval between the separated plates 15, 15 can be modified depending on the type of vehicle, usage environment, type of usage, etc. The separated plates 15, 15 and the brackets 16L, 16R for the separated plates can be made from light weight metal materials such as aluminum, aluminum alloy and the like. Jointing portions C4L, C4R are respectively provided to the brackets 16L, 16R for the separated plates, each jointing portion has a shaft and bearing swingable connecting the separated plates 15, 15 to the pair of right and left outer link arms 13L, 13R in the back and front direction. For each separated plate 15, 15, flat joint surface 17, 17 which can surface-to-surface contact with the inner surface of the tread 7 is formed. Therefore, the segment 12 functions as the horizontal link bar of the link mechanism 8 and also functions as a supporter which supports the tread 7 at the inner surface side of the tread. For fixing the tread 7 to the segment 12, the inner surface of the tread 7 and the joint surfaces 17, 17 can be jointed by various adhesive joint methods including vulcanization bonding. Alternatively, as this embodiment, in view of allowing the tread 7 to be easily put on and taken off, the tread 7 can be fixed to the segment 12 by way of well-know fixing member such as bolt and nut. Although the segment 12 for tread supporter is used as the horizontal link bar in view of reducing the number of parts, a shaft (not shown) connecting between the pair of right and left bracket 16L, 16R for the separated plates one another may be additionally provided as the horizontal link bar. According to this configuration, since the link mechanism can deform without twist, not only the strength against lateral force but the strength of the whole tire can be improved.

The ring-like members 9L, 9R are provided on the right and left sides in the tire width direction one on each side. The ring-like members 9L, 9R are respectively held by brackets 18L, 18R (for the ring-like member) of the outer link arms 13L, 13R of the link mechanism 8 and continuously extend in the tire circumferential direction. Each cross-sectional shape of the ring-like member 9L, 9R is circular. Materials and the like of the ring-like members 9L, 9R are not limited as long as the ring-like members can generate the predetermined reaction force against the displacement of the tread 7 relative to the wheel 3 in the tire width direction and the tire radial direction. For example, the ring-like members 9L, 9R can be made from stainless steel or carbon steel, and may be in the form of strand, single wire, or cable. Alternatively, the ring-like member can be constituted by a plurality of coil springs (not shown) connecting adjacent link mechanisms in the tire circumferential direction with each other.

According to the tire of the present embodiment, when a vertical load is applied to the tread 7 in a case where the tire 2 is mounted to the wheel 3 to form the tire/wheel assembly 1 as shown in FIG. 5(a), the link mechanisms 8 deform and ring-like members 9L, 9R mainly eccentrically deform while entailing a slight deformation toward out-of-plane direction with respect to a plane parallel to the tire equatorial plane as shown in FIG. 5(b). Thus, the tread 7 moves toward the radial inner direction relative to the wheel 3 while receiving the reaction force generated from the deformation of the ring-like members. When a lateral force is applied to the tread 7 in the above situation, the link mechanisms 8 deforms and the ring-like members 9L, 9R mainly sufficiently deform toward out-of-plane direction with respect to the plane parallel to the tire equatorial plane while entailing a slight eccentric deformation. Thus, the tread 7 moves toward the lateral force input direction relative to the wheel 3 while receiving the reaction force generated from by the deformation of the ring-like members.

Therefore, according to the tire 2 of the present embodiment, since the plurality of the link mechanisms 8 are provided outside the wheel 3 with the interval therebetween in the tire circumferential direction and the endless track like tread 7 is supported by the segments 12 respectively provided on the upper part of the link mechanisms 8, it is possible to eliminate the use of the pressured air or gas, hence, it is possible to eliminate the risk of the degradation or loss of the tire internal pressure.

Further, according to the tire 2 of the present embodiment, since the flexibility is higher and the amount of rubber material is less than the solid tire with the solid structure, it is possible to reduce the rolling resistance and sufficiently improve the drive comfort and drivability. Also, since it is constituted to generate the reaction force against the relative displacement of tread 7 to the wheel 3 in the tire radial direction and tire width direction by way of connecting the link members 8 one another in the circumferential direction with the ring-like members 9L, 9R, it is possible to drastically reduce its weight in comparison with the conventional non-pneumatic tire which each link mechanism has at least one type of elastic means. Also, since the number of components of elastic means is reduced, assembly and maintenance is easier.

Further, according to the tire 2 of the present embodiment, since the link mechanism 8 is connected via the torsion bar 10 which generates reaction force against the swing of the link mechanism 8 in back and forth directions (the swing in a plane parallel to the tire equatorial plane) relative to the wheel 3, a desired back and force springs (in the tire circumferential direction) can be ensured.

Further, according to the tire of the present embodiment, the tread 7 is supported by the plurality of the segments 12 at its inner surface, it is possible to improve a pressing force (grip force) and to uniform a distribution of contact pressure of the tread.

In view of reducing spring which the tread 7 has with it by way of effectively imparting the reaction force to the link mechanisms 8, it is preferable that the ring-like members 9L, 9R are respectively positioned on the outer link arms 13L, 13R. This is because, in a case where the ring-like members 9L, 9R are respectively positioned on the inner link arms 11L, 11R,
since the deformation of ring-like members 9L, 9R become smaller during the displacement of the tread 7 in the tire circumferential, the reaction force that comes along with the deformation of the ring-like members becomes smaller, hence the vertical spring of the tire has to be increased by way of reinforcing the tread 7 for example. That is to say, in the case where the ring-like members 9L, 9R are respectively mounted on the inner link arms 11L, 11R, the outer link arms 13L, 13R tend to swing easily in the tire width direction due to a luck of binding force for the outer link arms 13L, 13R, whereby it is preferable that the ring-like members 9L, 9R are respectively mounted on the outer link arms 13L, 13R.

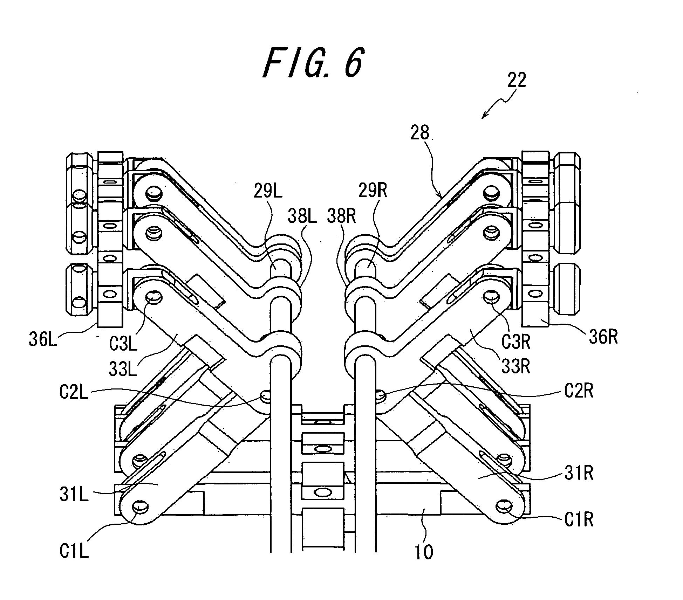

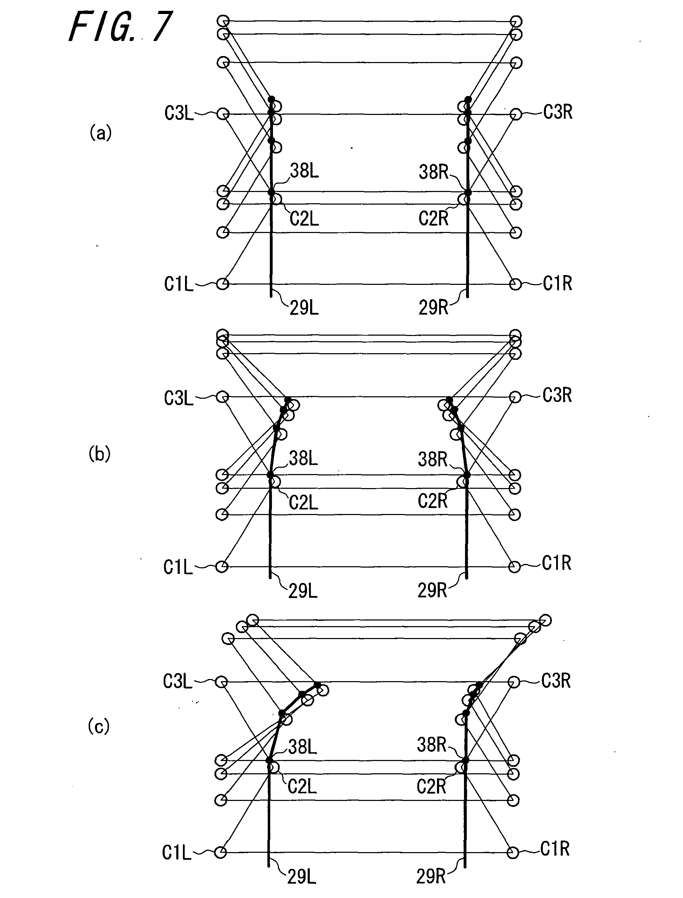

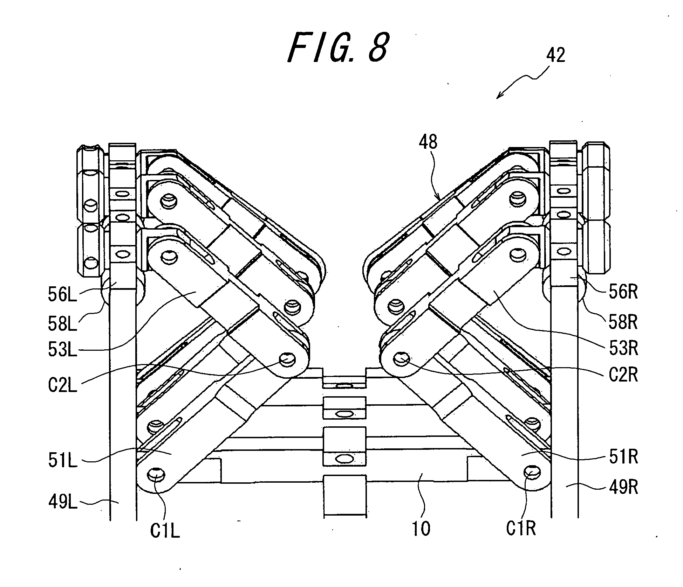

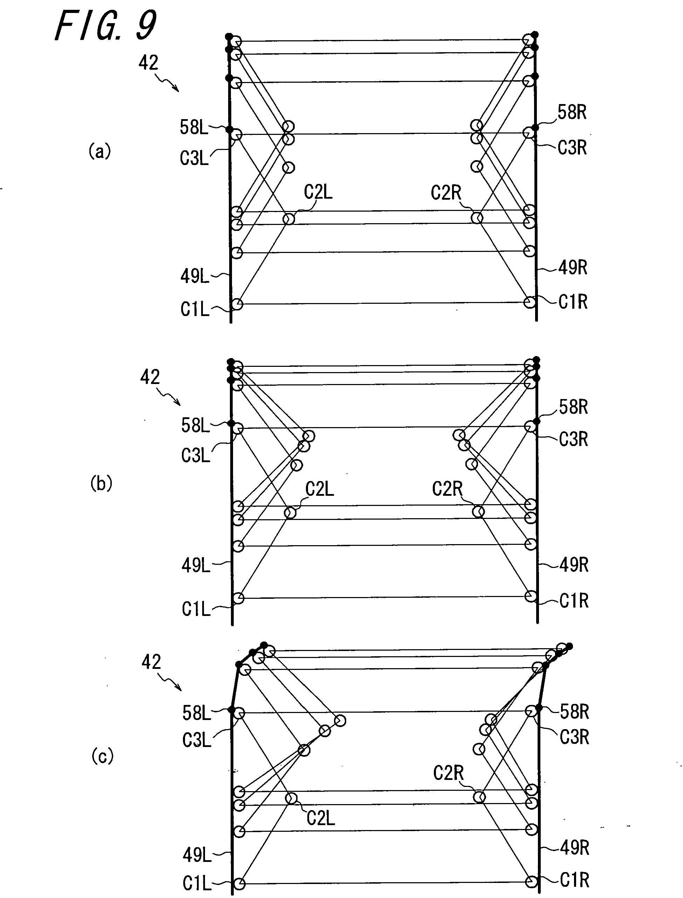

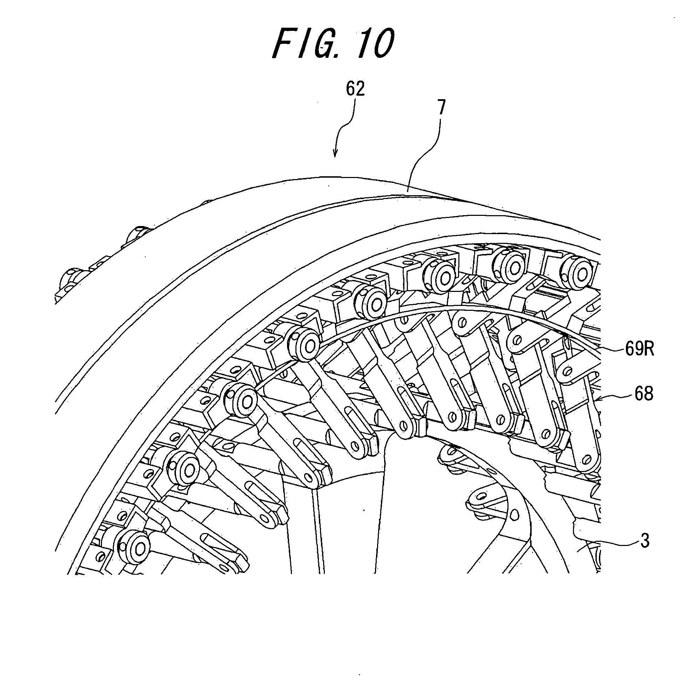

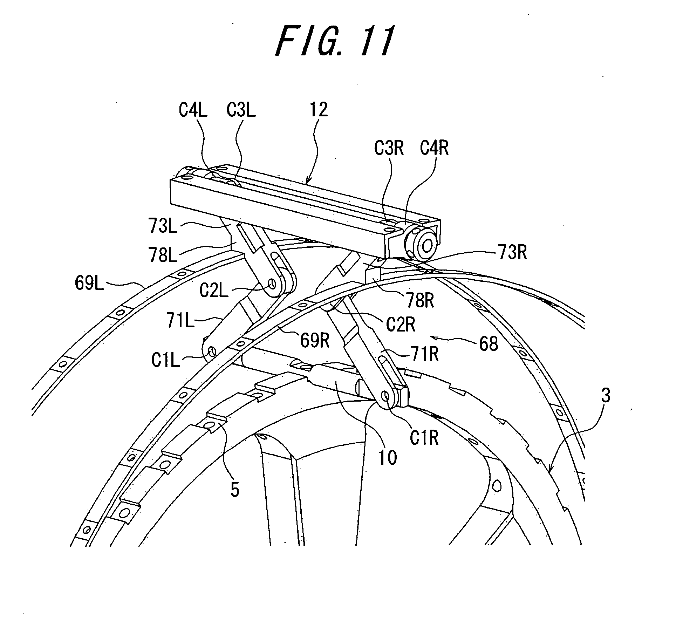

Next, a tire according to another embodiment of the present invention will be described. Here, FIG.6 is a front view of a tire/wheel assembly which a non-pneumatic tire according to another embodiment of the present invention is mounted to a wheel in the same state as FIG.4. FIG.7 is a schematic front view of the tire/wheel assembly of FIG.6 in a state of being applied a vertical load and lateral force. FIG.8 is a front view of a tire/wheel assembly which a non-pneumatic tire according to another embodiment of the present invention is mounted to a wheel in the same state as FIG.4. FIG.9 is a schematic front view of the tire/wheel assembly of FIG.8 in a state of being applied a vertical load and lateral force. FIG.10 is a partial enlarged perspective view of a tire/wheel assembly which a non-pneumatic tire according to another embodiment of the present invention is mounted to a wheel. FIG.11 is a perspective view showing one of link mechanisms of the non-pneumatic tire of the embodiment of FIG. 10 in mounted state to the wheel. It is noted that like reference numerals are used to refer to similar components of the above embodiment and its details are omitted.

In the tire 22 of the embodiment as shown in FIG. 6 and FIG. 7, each of link mechanisms 28 has a pair of right and left inner link arms 31L, 31R swingablly connected to the wheel 3 via the torsion bar 10 in a plane along the tire width direction, the segment 12 as the horizontal link bar disposed outside the wheel 3 in the tire radial direction and extending along the tire width direction, and a pair of right and left outer link arms 33L, 33R swingablly connecting these inner link arms 31L, 31R and segment 12 in the plane along the tire width direction. Jointing portions C2L, C2R respectively connecting the pair of right and left inner link arms 31 L, 31 R and the pair of right and left outer link arms 33L, 33R are respectively located inner side of the ends of segment 12 in the tire width direction. The ring like-members 29L, 29R are respectively disposed on the right and left sides in the tire width direction and held by brackets 38L, 38R (for the ring-like members) of the outer link arms 33L, 33R.

According to the tire 22 of the present embodiment, since the jointing portions C2L, C2R which respectively connect the inner link arms 31 L, 31R and the outer link arms 33L, 33R are respectively located inner side of the ends of segment 12 in the tire width direction, as shown in FIG. 7 the jointing portions C2L, C2R do not project from the width ends of the tread 7 toward the tire width outward direction when the tread 7 move in the tire radial and width directions relative to the wheel 3, whereby the risk of breakage of the tire due to contact with obstacles can be eliminated. Moreover, downsizing of the tire can be made.

In the tire 42 of the embodiment as shown in FIG. 8 and FIG. 9, as well as the tire 22 of the embodiment as shown in FIG. 6 and FIG. 7, each of link mechanisms 48 has a pair of right and left inner link arms 51L, 51R swingablly connected to the wheel 3 via the torsion bar 10 in a plane along the tire width direction, the segment 12 as the horizontal link bar disposed outside the wheel 3 in the tire radial direction and extending along the tire width direction, and a pair of right and left outer link arms 53L, 53R swingablly connecting these inner link arms 51L, 51R and segment 12 in the plane along the tire width direction. Jointing portions C2L, C2R which respectively connect the inner link arms 51L, 51R and the outer link arms 53L, 53R are respectively located inner side of the segment 12 in the tire width direction. In this embodiment, brackets 58L, 58R (for the ring-like members) are integrated with brackets 56L, 56R (for separate plates) of the segment 12, therefore, the ring-like members 49L, 49R are respectively held by these brackets 58L, 58R for the ring-like members.

According to the tire 42 of the present embodiment, since the ring-like members 49L, 49R are disposed on the segment 12, in a case where vertical load is applied to the tread as shown in FIG. 9(b), the ring-like members 49L, 49R only eccentrically deform, i.e., they do not involve out-of-plane deformation with respect to the plane parallel to the tire equatorial plane. Further, in a case where lateral load is applied to the tread 7 as shown in FIG. 9(c), the ring-like members 49L, 49R only deform toward the out-of-plane direction with respect to the plane parallel to the tire equatorial plane, i.e., they do not involve the eccentric deformation as viewed from the side of the tire. Therefore, according to the tire 42 of the present embodiment, since it is possible to independently provide the reaction force with respect to the vertical load and lateral load , desired vertical spring (reaction force against the vertical load) and lateral spring (reaction force against the lateral load) of the tire can be easily and certainly designed under independent relation with respect to one another. On the other hand, in view of reducing stress loading of the ring-like members due to its deformation which is caused by the displacement of the tread 7 relative to the wheel 3 in the tire radial and width directions, it is preferable that the ring-like members cause shared deformation with respect to either the vertical load or lateral load, i.e., it is preferable that the ring-like members are disposed on the outer link members or the inner link members such as the embodiment shown in FIGs. 1-7. This is because ring-like member can be involved both of the eccentric deformation and out-of-plane deformation with respect to the plane parallel to the tire equatorial plane, whereby excessive deformation of the ring-like member can be prevented.

In the tire 62 of the embodiment as shown in FIGs. 10 and 11, although basic structure of the link mechanisms 68 and the disposition in which the ring-like members 69L, 69R are respectively disposed on the outer link arms 73L, 73R are almost same as that of the tire 22 of the above-mentioned embodiment shown in FIG.6 and FIG.7, the configuration of the ring-like members 69L, 69R is different. The ring-like members 69L, 69R of the present embodiment are formed with thin-plate-like member having laterally long rectangular section in the cross section along the tire width direction. The ring-like members 69L, 69R are respectively fixed to projected portion 78L, 78R which are provided in the middle portion of the outer link arms 73L, 73R, by means of fixing elements such as screw.

According to the tire 62 of the present embodiment, since the sectional shape of the ring-like members 69L, 69R are formed into the laterally long rectangular section to adjust the geometric moment thereof, lateral spring which is the reaction force against the lateral load can be increased, whereby excellent cornering force can be ensured. It goes without saying that improved cornering force can be obtained even if the ring-like members with circular section as the embodiment described above, by adjusting those diameter, material and the like.

The foregoing descriptions merely show a part of an embodiment of the present invention, and the structures described above may be combined with each other and/or various modifications may be made unless such combinations/modifications digress from the spirit of the present invention. For example, although the wheel is used as the mounting element in the aforementioned embodiment, not limited to this, the tire can be mounted to the axle of the vehicle directly without using such wheel, rim, and the like. According to this configuration, drastic downsizing and weight saving can be achieved. Further, although the inner link arms are connected indirectly to the wheel via the torsion bar in the aforementioned embodiment, they may be directly connected to the wheel. In addition, the pair of separated plates is used as constitutive element in the aforementioned embodiment, single plate member or more than two pieces of separated plates may be used, instead.

### Test Examples

Next, the present inventor experimentally produced present example tires 1 and 2 according to the present invention, conventional example tires 1 and 2 for comparison, and comparative example tire 1 for comparison, and conducted performance tests on weight, cornering performance, stress loaded to the link arm, drive comfort performance, drivability , and rolling resistance.

The example tire 1 has a size equivalent to a tube type pneumatic tire with size of 3.00-8, and has a structure as shown in FIGs. 1-4, and uses single wire of 2.6 mm in diameter with circular section which made from stainless, as the each ring-like member.

The example tire 2 has a size equivalent to a tube type pneumatic tire with size of 3.00-8, and has a structure as shown in FIGs. 11 and 11, and uses single wire made from stainless with rectangular section which has 5.5 mm in width (length in the tire width direction) and 1.4 mm in height (length in the tire radial direction), as the each ring-like member.

The conventional example tire 1 is non-pneumatic, solid tire conform to customary practices, with size of 3.00-8.

The conventional example tire 2 is tube type, pneumatic tire by convention, with size of 3.00-8, and is filled with pressured air of 175 kPa (relative pressure).

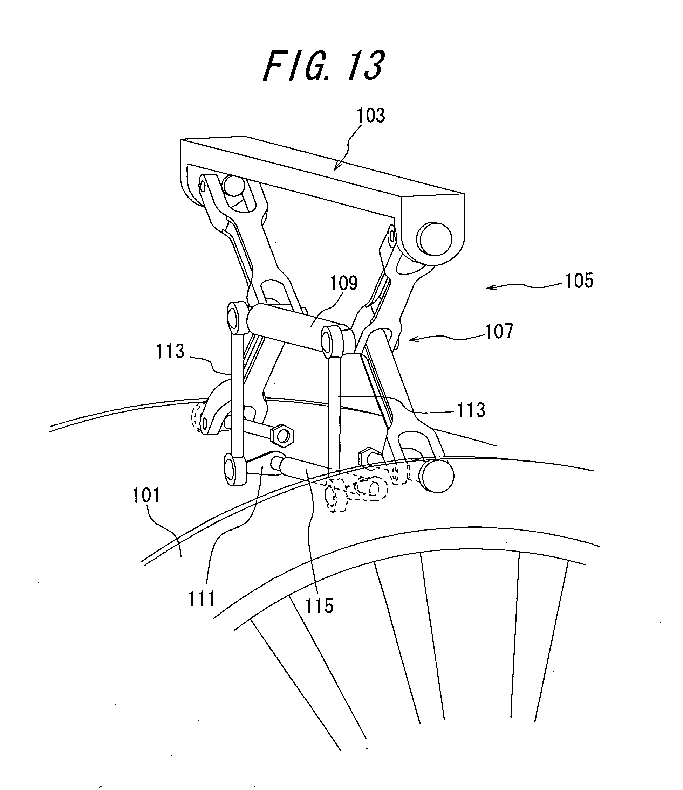

The comparative example tire 1 is link-type, non-pneumatic tire and has a size equivalent to a pneumatic tire with size of 3.00-8. As shown in FIG. 13, in this tire, a rim-like member 101 and a tread support member 103 is connected by link mechanisms 15. Each elastic means has a spring member 109 connecting hinge portions 107 with each other, and a torsion bar 115 connected to each hinge portion 107 via a pair of connecting rods 113 with a moment arm 111.

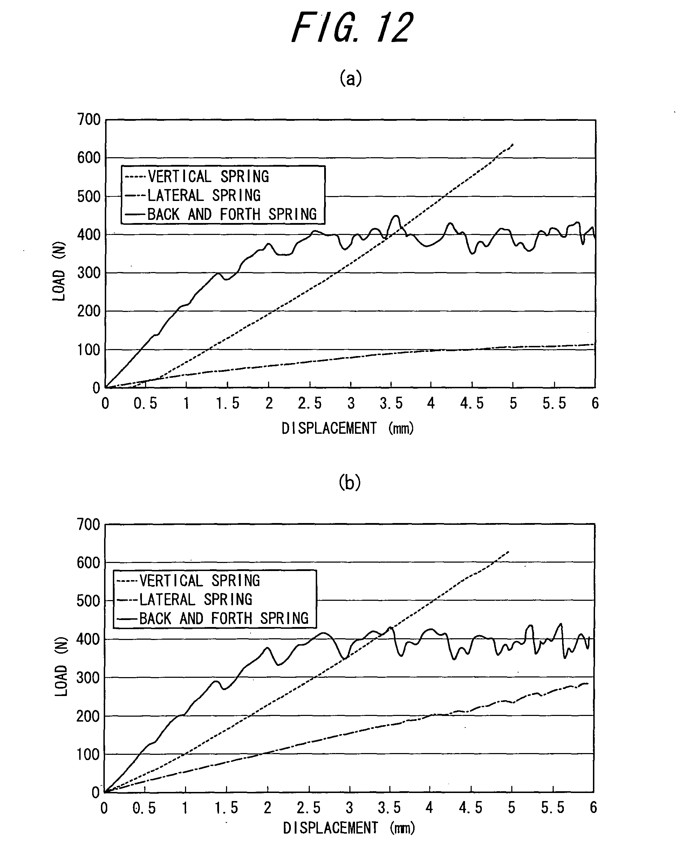

The present inventor assembled the each tire to rim or wheel to form tire/wheel assembly and calculated the vertical spring (reaction force in the tire radial direction), lateral spring (reaction force in the tire width direction), and the back and forth spring (reaction force in the tire circumferential direction) with using finite element method (FEM) analysis under the condition where each the tire/wheel assembly is applied vertical load of 600N during grounding and displaced 6mm toward the tire width direction and 6mm toward the tire circumferential direction. The results on the example tires 1 and 2 are shown in FIGs. 12(a), (b),

Here, appraisal of the cornering performance is conducted by indexing the value of the lateral spring calculated by the aforementioned FEM analysis and its results are shown in Table 1. It is referred that, in the cornering performance, the higher the index is, the better performance is. Further, appraisal of the loaded stress to the ring-like members is conducted by indexing maximum stress value (MPa) of the link arm, calculated by the aforementioned FEM analysis. It is referred that, in the loaded stress to the link arm, the smaller the index is, the smaller of the loaded stress to the link arm is.

The drive comfort performance is appraised by driver's feeling in-vehicle test under a condition where each tire/wheel assembly is mounted to electric cart and one passenger is on board. Also, the drivability is appraised by the driver's feeling under the same condition. Their results are shown in Table 1. It is referred that, in the drive comfort performance and drivability, the higher the value is, the better performance is.

The rolling resistance is obtained by traveling the tire/wheel assembly on a test drum with 6km/h speed, under applying 600N load thereon, and then measuring resistance value of the drum axis of the test drum. It is referred that, in the rolling resistance, the higher the value is, the better performance is.

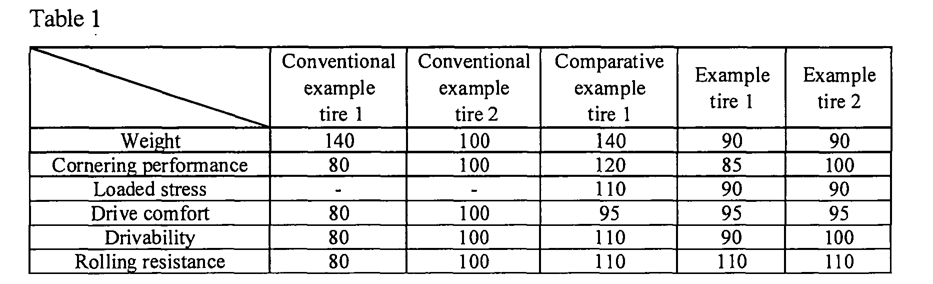

According to the result of the Table 1, the present example tires 1 and 2 is drastically lighter than the comparative example tire. It is also understood from FIG. 12(a), (b) that the lateral spring can be high by using the ring-like members with the laterally long rectangular section. It is possible to improve the cornering performance (lateral spring) even if the ring-like member with circular section as the present example tire 1 is used, by adjusting its diameter, material and the like.

### Industrial Applicability

As is obvious from the descriptions described above, according to the present invention, a link-type non-pneumatic tire which can reduce the rolling resistance and improve the drive comfort and drivability compare to the solid tire, and also drastically reduce its weight compare to the conventional link-type non-pneumatic tire can be provided.

## Claims

1. A non-pneumatic tire to be mounted to a circular mounting element to form tire/wheel assembly, comprises:
a tread disposed outside the mounting element in a tire radial direction and extending in a tire circumferential direction in a state where constituting the tire/wheel assembly;
a plurality of link mechanisms mounded to the mounting element with intervals therebetween in the tire circumferential direction and connecting the tread to the mounting element in such a manner that the tread can move in the tire width direction and radial direction with respect to the mounting element; and
ring-like members extending in the tire circumferential direction and connecting circumferentially adjacent link mechanisms with each other to generate reaction force against a displacement of the tread relative to the mounting element.

2. The non-pneumatic tire of claim 1, wherein each the link-mechanism is constituted with a horizontal link bar disposed outside the said mounting element in the tire radial direction and extending along the tire width direction, a pair of right and left inner link arms which are swingablly disposed to said mounting element in a plane along the tire width direction, and a pair of right and left outer link arms swingablly connecting these inner link arms and horizontal link bar,
wherein said ring-like members respectively are provided on the pair of the outer link arms.

3. The non-pneumatic tire of claim 2, wherein jointing portions between said outer link arms and said inner link arms are respectively located inner side of the ends of said horizontal link bar in the tire width direction.

4. The non-pneumatic tire of any of claims 1 to 3, wherein said link mechanism is connected to said mounting element via a torsion spring which generates reaction force against the swing of the link mechanism in the tire circumferential direction relative to said mounting element.

5. The non-pneumatic tire of any of claims 1 to 4, wherein a sectional shape of the ring-like member is formed into a laterally long rectangular section in a cross section along the tire width direction.
